**Europäisches Patentamt**

**European Patent Office**

**Office européen des brevets**

(19)

(11) Veröffentlichungsnummer : **0 487 499 A2**

(12) ## EUROPÄISCHE PATENTANMELDUNG

(21) Anmeldenummer : **91890288.3**

(22) Anmeldetag : **18.11.91**

(51) Int. Cl.$^5$ : **G01N 9/00**

(30) Priorität : **22.11.90 AT 2378/90**

(43) Veröffentlichungstag der Anmeldung :
**27.05.92 Patentblatt 92/22**

(84) Benannte Vertragsstaaten :
**AT BE CH DE DK ES FR GB GR IT LI LU NL SE**

(71) Anmelder : **Stabinger, Hans, Dr.**
**Peterstalstrasse 156**
**A-8042 Graz (AT)**

(71) Anmelder : **Leopold, Hans, O. Univ.-Prof. Dr.**
**Sonnleitenweg 17**
**A-8043 Graz (AT)**

(72) Erfinder : **Stabinger, Hans, Dr.**
**Peterstalstrasse 156**
**A-8042 Graz (AT)**

(74) Vertreter : **Gibler, Ferdinand, Dipl.Ing. Dr.**
**techn.**
**Dorotheergasse 7/14**
**A-1010 Wien (AT)**

(54) **Vorrichtung zur Bestimmung der Dichte von Flüssigkeiten und Gasen aus der Periodendauer eines mit einem Präparat gefülltenSchwingers.**

(57)   Vorrichtung zur Bestimmung der Dichte von Flüssigkeiten und Gasen aus der Periodendauer eines mit einem Präparat gefüllten Schwingers (1), zu dessen Anregung ein Erregerverstärker (13) vorgesehen ist, der mit einem die Schwingungen des Schwingers (1) aufnehmenden Sensor (2) verbunden ist und dessen Signale verstärkt, die einem ausgangsseitig des Erregerverstärkers (13) angeordneten und den Schwinger antreibenden Wandler (7) zuführbar sind. Um eine Kompensation des Einflusses der Viskosität der zu untersuchenden Probe zu ermöglichen, ist vorgesehen, daß mindestens ein über einen Umschalter (4) in den Erregerverstärker (13) schaltbarer, eine Phasenverschiebung zwischen den Schwingungen des Schwingers (1) und den Signalen des Erregerverstärkers (13) bewirkender Schaltkreis (5, 6) vorgesehen ist.

Fig.4

EP 0 487 499 A2

Die Erfindung bezieht sich auf eine Vorrichtung zur Bestimmung der Dichte von Flüssigkeiten und Gasen aus der Periodendauer eines mit einem Präparat gefüllten Schwingers, zu dessen Anregung ein Erregerverstärker vorgesehen ist, der mit einem die Schwingungen des Schwingers aufnehmenden Sensor verbunden ist und dessen Signale verstärkt, die einem ausgangsseitig des Erregerverstärkers angeordneten und den Schwinger antreibenden Wandler zuführbar sind.

Eine solche Vorrichtung wurde z.B. durch die AT-PS 356 943 bekannt. Bei dieser Einrichtung ist ein Kreis zur Entdämpfung, der im wesentlichen aus einem Differentiator und einem Begrenzer besteht, und ein weiterer Kreis zur temperaturabhängigen Verstimmung der Resonanzfrequenz des Schwingers vorgesehen. Dieser besteht aus einer temperaturabhängigen Widerstandsbrücke, einem Summierverstärker und Integratoren zur Phasendrehung.

Bei dieser bekannten Einrichtung ist es daher möglich eine Erregung des Schwingungsgebildes und eine Verstimmung der Resonanzfrequenz zu erreichen, wodurch eine Temperaturkompensation und/oder eine Gegenmassenkompensation erreicht werden kann, letztere um für die Berechnung der Dichte das dieser zugrundeliegende Modell eines Koppelschwingersystems "Gegenmasse-Feder-Meßschwinger" auf das theoretisch ideale, einfache Schwingersystem "Feder-Schwingmasse" zurückzuführen.

Der Schwinger mit der in diesem enthaltenen zu untersuchenden Probe stellt ein Schwingungsgebilde dar, das so ausgebildet ist, daß ein definiertes Volumen des zu untersuchenden Präparates an der Schwingung teilnimmt und daher die Periodendauer $\tau$ beeinflußt. Dabei kann die Periodendauer $\tau$ eines solchen Schwingungsgebildes nach der folgenden Gleichung (1) berechnet werden.

$$\tau = 2\pi \sqrt{\frac{M_o + V}{c}} \quad (1)$$

Darin bedeuten $M_o$ die Masse des leeren Schwingers, c seine elastische Konstante, $\rho$ die Dichte und V das Volumen des an Schwingung teilnehmenden Präparates. Die Quotienten $M_o/c$ und $V/c$ können als schwingerspezifische Apparatekonstante betrachtet werden.

Nach Umformung und Definition einfacher Konstanten A und $T_o$ erhält man die folgende Gleichung (2):

$$\rho = \frac{1}{A} \cdot (T^2 - T_o^2) \quad (2)$$

Dabei ist T ein ganzzahliges Vielfaches der Periodendauer $\tau$, $T_o$ ein um denselben Faktor vermehrtes Vielfaches der Periodendauer $\tau_o$ des leeren Schwingers. Die Faktoren A und $T_o$ werden ermittelt, indem die Gleichung (2) für zwei bekannte Werte von $\rho$, und T aufgestellt und nach A und $T_o$ gelöst wird.

Besteht das Schwingungsgebilde, wie bei der bekannten Lösung, aus einem ein- oder beidseitig eingespannten schwingendem Rohr, in dem die zu messende Substanz eingeschlossen ist, so gelten die Gleichungen (1) und (2) nur für nicht-viskose Flüssigkeiten. Bei viskosen Flüssigkeiten gegebener Dichte wird eine größere Periode beobachtet.

Aufgabe der Erfindung ist es daher eine Einrichtung der eingangs erwähnten Art vorzuschlagen, die es ermöglicht den Einfluß der Viskosität der zu untersuchenden Probe zu kompensieren.

Erfindungsgemäß wird dies dadurch erreicht, daß mindestens ein über einen Umschalter in den Erregerverstärker einschaltbarer, eine Phasenverschiebung zwischen den Schwingungen des Schwingers und den Signalen des Erregerverstärkers bewirkender Schaltkreis vorgesehen ist.

Auf diese Weise ist es möglich den Schwinger mit in verschiedenen Phasenlagen zu den Schwingungen desselben liegenden Signalen anzuregen.

Wird nun ein Schwingungsgebilde durch eine harmonische Krafteinwirkung in Phase mit seiner Geschwindigkeitsamplitude erregt, so stellt sich die natürliche Resonanzfrequenz ein, da die geschwindigkeitsabhängige Dämpfkraft vollständig von der Erregerkraft aufgehoben wird. Stimmt jedoch die Phasenlage der erregenden Kraft nicht mit jener der Dämpfkraft überein, so ergibt sich eine Resonanzfrequenz des Schwingungsgebildes, die von der natürlichen um einen Betrag ungefähr proportional zur Größe der Dämpfkraft und Phasendifferenz zwischen Erreger- und Dämpfkraft abweicht.

Daraus ergibt sich, daß die Dämpfkraft aus der Verstimmung des Schwingungsgebildes ermittelt werden kann, die sich ergibt, wenn das Schwingungsgebilde nacheinander mit Erregerkräften unterschiedlicher Phasen angeregt wird.

Mit der erfindungsgemäßen Einrichtung ist es daher möglich, den die zu untersuchende Probe enthaltenden Schwinger mit Signalen unterschiedlicher Phasenlage anzuregen, sodaß sich zwei Resonanzfrequenzen ergeben, die erfaßt werden und aus denen sich nach der folgenden Gleichung (3) die Dämpfungskonstante errechnen läßt.

$$b = \frac{f_2^2/f_1^2 - 1}{tg\, \varnothing_1 - tg\, \varnothing_2} \quad (3)$$

Dabei bedeuten b die Dämpfungskonstante, $f_1$ und $f_2$ die Resonanzfrequenzen, $\varnothing_1$ und $\varnothing_2$ die dazugehörigen Phasendifferenzen der Bewegung der den Schwinger anregenden Wandler zur Bewegung des Schwingers.

Die Abhängigkeit des durch die Viskosität bedingten relativen Meßfehlers der Dichte $\Delta\rho/\rho$ von der Dämpfungskonstanten b kann experimentell ermittelt werden. Dazu können Präparate unterschiedlicher Viskosität und bekannter Dichte in das Schwingungsgebilde eingebracht und die zwei Resonanzfrequenzen gemessen werden. Daraus kann für jedes Präparat der viskositätsbedingte Dichtemeßfehler $\Delta\rho/\rho$ und die zugegörige Dämpfkonstante b errechnet werden.

Nach einem weiteren Merkmal der Erfindung kann vorgesehen sein, daß der Erregerverstärker weiters mindestens zwei Frequenzmeß- und Speicherkreise aufweist, die über einen Umschalter wahlweise mit dem Ausgang eines mit dem Sensor verbundenen Verstärkers des Erregerverstärkers verbindbar sind.

Auf diese Weise lassen sich die erfaßten Resonanzfrequenzen einfach messen und speichern und können zur weiteren Verarbeitung aus diesen Kreisen abgerufen werden.

Weiters kann vorgesehen sein, daß die beiden Umschalter von einem Mikroprozessor gesteuert sind, der mit den Frequenzmeßund Speicherkreisen verbunden und vorzugsweise mit einer Dichteanzeige verbunden ist.

Auf diese Weise ergibt sich die Möglichkeit einer einfachen und raschen Auswertung der Messungen.

Die Erfindung wird nun anhand der Zeichnung näher erläutert. Dabei zeigen:

Fig. 1 ein Diagramm des Dichtemeßfehler $\Delta\rho/\rho$ in Abhängigkeit von der Viskosität,

Fig. 2 ein Diagramm der Dämpfungskonstante b in Abhängigkeit von der Viskosität,

Fig. 3 ein Diagramm in dem die Diagramme nach den Fig. 1 und 2 kombiniert sind, und

Fig. 4 eine erfindungsgemäße Vorrichtung.

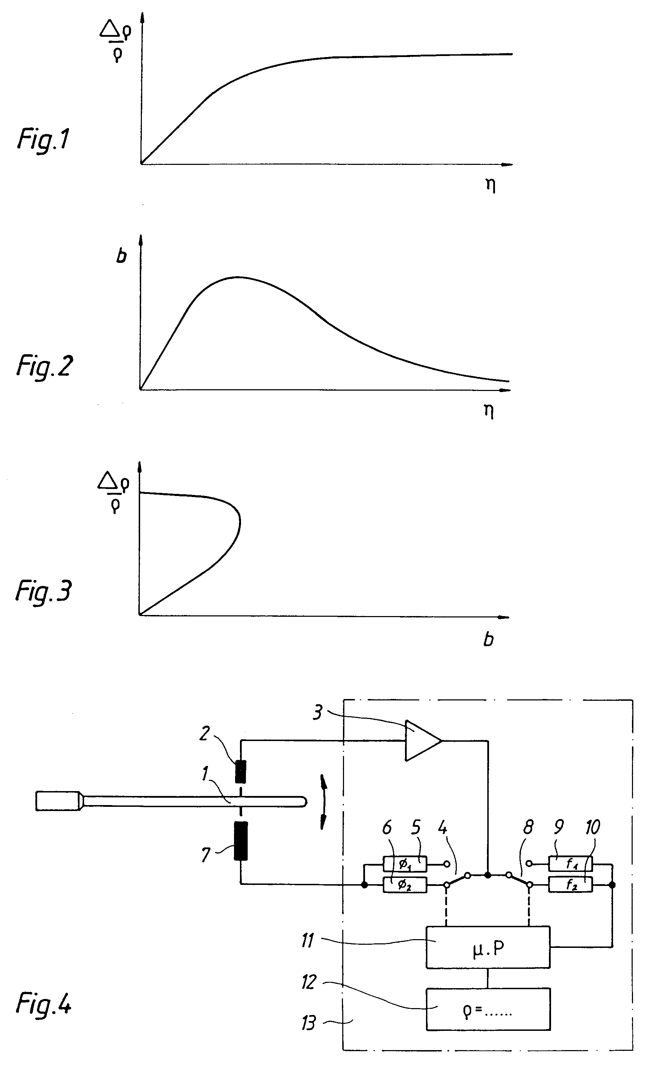

Aus der Fig. 1 ist zu ersehen, daß der Dichtemeßfehler $\Delta\rho/\rho$ mit steigender Viskosität $\eta$ zuerst im wesentlichen linear ansteigt und dann über einen gekrümmten Verlauf in einen Sättigungsbereich übergeht, in dem der Dichtemeßfehler mit weiter steigender Viskosistät der zu untersuchenden Probe nur mehr wenig ansteigt.

Die Fig. 2 zeigt den Verlauf der Dämpfungskonstante b in Abhängigkeit von der Viskosität $\eta$. Aus diesem Diagramm ergibt sich, daß die Dämpfungskonstante im Bereich niedriger Viskosität mit steigender Viskosität relativ steil ansteigt und nach einem Übergangsbereich relativ sanft abfällt.

Die Fig. 3 zeigt das sich aus der Kombination der beiden Diagramme nach den Fig. 1 und 2 ergebende Diagramm des Dichtemeßfehlers $\Delta\rho/\rho$ in Abhängigkeit von der Dämpfungskonstante b. Dabei zeigt sich, daß die Beziehung zwischen dem Dichtemeßfehler und der Dämpfungskonstante zweideutig ist, die auf die Abnahme der Dämpfung bei hoher Viskosität zurückzuführen ist. Dies ist jedoch kein besonders ins Gewicht fallender Nachteil, da die Viskosität einer Probe in aller Regel zumindest im hinblick auf den Bereich ihrer Viskosität bekannt ist, bzw. diese relativ leicht ermittelbar ist.

Die Fig. 4 zeigt schematisch eine erfindungsgemäße Vorrichtung. Dabei ist der Schwinger 1, der mit der zu untersuchenden Probe füllbar ist, mittels eines Wandlers 7 in Schwingung versetzbar. Dabei wandelt der Wandler 7 elektrische Signale in mechanische Schwingungen um, die den Schwinger erregen.

Die Schwingungen des Schwingers 1 werden von einem Sensor 2 aufgenommen und von diesem in elektrische Signale umgesetzt, die einem Verstärker 3 des Erregerverstärkers 13 zugeführt werden. Die verstärkten Signale gelangen zu den Eingängen zweier Umschalter 4 und 8.

Bei der dargestellten Ausführungsform schaltet der Umschalter 4 wahlweise auf einen von zwei Schaltkreisen 5, 6 um, die parallel zueinander geschaltet und ausgangsseitig mit dem Wandler 7 verbunden sind. Diese Kreise 5, 6 bewirken eine Phasenverschiebung der den Wandler 7 zugeführten Signale gegen über den Schwingungen des Schwingers 1, bzw. den Ausgangssignalen des Sensors 2, wobei das Ausmaß der Phasenverschiebung, das der Kreis 5 bewirkt von jenem das der Kreis 6 bewirkt verschieden ist. Diese Kreise können z.B. durch Tiefpässe gebildet sein.

Durch Umschaltung von einem Kreis 5, 6 auf den anderen ergeben sich andere Resonanzfrequenzen des Schwingers 1, die von den an dem Umschalter 8 angeschlossenen Frequenzmeß- und Speicherkreise 9, 10 erfaßt und gespeichert werden, wobei in einem dieser Kreise 9, 10 die bei Einschaltung des einen Kreises 5, 6 sich ergebende Resonanzfrequenz erfaßt und gespeichert wird und im zweiten Kreis 9, 10 die sich bei Einschaltung des zwei.ten Kreises 5, 6 ergebende Resonanzfrequenz erfaßt und gespeichert wird. Dabei erfolgt die Steuerung der beiden Umschalter 4, 8 durch einen Mikroprozessor 11, der mit den Ausgängen der Frequenzmeß- und Speicherkreise 9, 10 verbunden ist.

Dieser Mikroprozessor 11 wertet die in den Kreisen 9, 10 erfaßten, bzw. gespeicherten Werte entsprechend den Gleichungen (1), (2) und (3) aus und errechnet die Dichte der untersuchten Probe. Diese wird in der Dichteanzeige 12, die mit dem Mikroprozessor 11 verbunden ist, angezeigt.

**Patentansprüche**

1. Vorrichtung zur Bestimmung der Dichte von Flüssigkeiten und Gasen aus der Periodendauer eines mit einem Präparat gefüllten Schwingers (1), zu dessen Anregung ein Erregerverstärker (13) vorgesehen ist, der mit einem die Schwingungen des Schwingers (1) aufnehmenden Sensor (2) verbunden ist und dessen Signale verstärkt, die einem ausgangsseitig des Erregerverstärkers (3) angeordneten und den Schwinger antreibenden Wandler (7) zuführbar sind, dadurch gekennzeichnet, daß mindestens ein über einen Umschalter (4) in den Erregerverstärker (13) schaltbarer, eine Phasenverschiebung zwischen den Schwingungen des Schwingers (1) und den Signalen des Erregerverstärkers (13) bewirkender Schaltkreis (5, 6) vorgesehen ist.

2. Vorrichtung nach Anspruch 1, dadurch gekennzeichnet, daß der Erregerverstärker (13) weiters mindestens zwei Frequenzmeß- und Speicherkreise (9, 10) aufweist, die über einen Umschalter (8) wahlweise mit dem Ausgang eines mit dem Sensor (2) verbundenen Verstärkers (3) des Erregerverstärkers ( 13) verbindbar sind.

3. Vorrichtung nach Anspruch 1 oder 2, dadurch gekennzeichnet, daß die beiden Umschalter (4, 8) von einem Mikroprozessor (11) gesteuert sind, der mit den Freguenzmeß-und Speicherkreisen (9, 10) verbunden und vorzugsweise mit einer Dichteanzeige (12) verbunden ist.

Fig.1

Fig.2

Fig.3

Fig.4